# EUROPÄISCHE PATENTSCHRIFT

(11) **EP 2 281 676 B1**
(45) Veröffentlichungstag und Bekanntmachung des Hinweises auf die Patenterteilung: **26.02.2014**
(21) Anmeldenummer: 10171231.3
(22) Anmeldetag: 29.07.2010
(51) Int. Cl.: B29C 49/12, B29C 49/64, B29C 49/78, B29C 49/36, B29C 35/08

(54) **Vorrichtung und Verfahren zum Umformen von Kunststoffvorformlingen mit synchroner Erwärmung und Reckung**
Device and method for reforming plastic preforms with synchronous heating and stretch forming
Dispositif et procédé de déformation de préformes en matière synthétique doté d'un chauffage et d'un étirement synchrone

(30) Priorität: 31.07.2009 DE 102009035868
(43) Veröffentlichungstag der Anmeldung: 09.02.2011
(73) Patentinhaber: Krones AG, 93073 Neutraubling (DE)
(72) Erfinder: Winzinger, Frank, 93073 Neutraubling (DE)
(74) Vertreter: Bittner, Bernhard

(56) Entgegenhaltungen:
- DE-A1-102006 015 475
- JP-A- 4 119 819
- JP-A- 2006 103 260

## Beschreibung

Die vorliegende Erfindung ist auf eine Vorrichtung zum Umformen von Kunststoffbehältnissen gerichtet. Derartige Vorrichtungen sind aus dem Stand der Technik seit langem bekannt. So ist es bekannt, dass Kunststoffvorformlinge zunächst in Heizstrecken erwärmt werden und anschließend mit Vorrichtungen, wie beispielsweise Blasformmaschinen, zu ihrer endgültigen Flaschenform expandiert werden. Diese Blasformmaschinen setzen dabei üblicherweise auch so genannte Reckstangen ein, welche die Behältnisse während des Expansionsvorganges in ihrer Längsrichtung dehnen.

Aus der DE 33 141 06 A1 sind ein Verfahren und eine Vorrichtung zum Herstellen von Hohlkörpern aus warmformbarem Kunststoff bekannt. Dabei erfolgt dieses Expansionsverfahren zweistufig, wobei zunächst ein werkzeugfreies Aufblasen des Vorformlings unter Wärmezufuhr erfolgt und anschließend in einem Hauptblasvorgang, der in einer weiteren Stufe erfolgt, die Endform des Behältnisses erzeugt wird. Dieses Verfahren, welches in der oben genannten Patentanmeldung aus den frühen achtziger Jahren offenbart wurde, ist mittlerweile insoweit überholt, als üblicherweise der gesamte Umformungsprozess in einem Schritt erfolgt, d .h. sowohl ein Vorblasen als auch der eigentliche Hauptblasschritt in dem gleichen Umformungsvorgang durchgeführt werden.

Insbesondere können mit diesem Verfahren mittlerweile auch komplizierte Flaschenformen erreicht werden, wobei der DE 33 141 06 A1 die primäre Aufgabe zugrunde lag, auch Behältnisse in komplizierter Form aus Kunststoffvorformlingen herzustellen.

Aus der WO 03/022551 A1 sind eine Vorrichtung um ein Verfahren zum Temperieren von Vorformlingen bekannt. Dabei ist eine Temperiereinrichtung zum Einbringen in das Innere der Vorformlinge vorgesehen.

Die EP 0237459 B1 beschreibt ein Verfahren und eine Vorrichtung zur Herstellung von Behältern. Dabei erfolgt ein Umformen des Kunststoffvorformlings in mehreren Schritten. Genauer wird nach dem Erwärmen des Kunststoffvorformlings zunächst ein Zwischenbehälter geformt und anschließend dieser Zwischenbehälter erwärmt und auf seine endgültige Form geformt. Weitere Verfahren und Vorrichtungen sind aus den Druckschriften DE 10 2006 015475 A1, JP 2006 103 260 und JP 04 119819 bekannt.

In jüngerer Zeit wird jedoch zunehmend auf Kosteneinsparung bei der Herstellung derartiger Kunststoffbehältnisse geachtet. Insbesondere wird nach Methoden gesucht, um den Materialverbrauch zu reduzieren. Bei der Herstellung dieser Kunststoffbehältnisse weisen die Kunststoffvorformlinge bereits ihr endgültiges Gewinde auf und lediglich der Grundkörper des Vorformlings wird gedehnt. Aus diesem Grunde ist streng darauf zu achten, dass der Bereich des Gewindes bei dem Umformungsvorgang nicht beschädigt wird, da ansonsten die späteren Schraubverschlüsse nicht mehr zufriedenstellend an dem Gewinde angebracht werden können. Durch diese Vorgehensweise ist es jedoch bislang nicht vermeidlich, dass direkt unterhalb des so genannten Tragrings des Behältnisses ein unverstreckter bzw. vergleichsweise dicker Wandbereich verbleibt. Dieser Bereich bedingt jedoch einen höheren Materialverbrauch.

Der vorliegenden Erfindung liegt daher die Aufgabe zugrunde, eine Vorrichtung und ein Verfahren zur Verfügung zu stellen, welche eine kostengünstigere Herstellung der Kunststoffbehältnisse erlauben. Insbesondere soll der Materialverbrauch bei der Herstellung derartiger Kunststoffbehältnisse reduziert werden. Diese Aufgaben werden erfindungsgemäß durch die Gegenstände der unabhängigen Ansprüche erreicht. Vorteilhafte Ausführungen und Weiterbildungen sind Gegenstand der Unteransprüche.

Eine erfindungsgemäße Vorrichtung zum Umformen von Kunststoffbehältnissen weist eine Transporteinrichtung auf, welche die Kunststoffbehältnisse transportiert. Weiterhin ist eine Heizeinrichtung vorgesehen, welche wenigstens einen Bereich der Kunststoffvorformlinge erwärmt. Weiterhin weist die Vorrichtung eine mechanisch auf den Kunststoffvorformling einwirkende Streckeinrichtung auf, welche den Kunststoffvorformling entlang seiner Längsrichtung dehnt. Erfindungsgemäß sind die Heizeinrichtung und die Streckeinrichtung derart angeordnet, dass ein Erwärmen der Kunststoffvorformlinge vor und nach dem Dehnen der Kunststoffvorformlinge (10) ermöglicht ist.

So ist es möglich, dass eine Erwärmung der Kunststoffvorformlinge vor und nach dem Dehnen derselben vorgenommen wird. Das Erwärmen vor dem Dehnen kann dabei beispielsweise dazu dienen, um während des Dehnens bzw. Reckens gezielt bestimmte Bereiche des Kunststoffvorformlings zu dehnen, beispielsweise einen Bereich unterhalb des Tragrings. Das Erwärmen nach dem Dehnen dient dazu, um anschließend den Kunststoffvorformling, beispielsweise durch eine Blasumformung zu dem Kunststoffbehältnis zu expandieren. Auch wäre es möglich, dass sowohl vor und nach dem Dehnen als auch während des Dehnens der Kunststoffvorformling erwärmt wird.

Auch wäre es möglich, dass eine schrittweise Erwärmung des Kunststoffvorformlings durchzuführen, beispielsweise in einem ersten Erwärmungsschritt vor dem Dehnen und einem zweiten Erwärmungsschritt nach dem Dehnen.

Vorteilhaft ist die Heizeinrichtung außerhalb des Kunststoffvorformlings angeordnet und bevorzugt auch stationär gegenüber dem Kunststoffvorformling. Damit erfolgt eine Erwärmung des Kunststoffvorformlings insbesondere von außen nach innen.

Auch wäre es möglich dass ein zumindest teilweise zeitgleiches Recken und Erwärmen des Kunststoffvorformlings erfolgt.

Während bei der oben beschriebenen DE 33 141 06 ein Aufblasen des Behältnisses zeitgleich mit einem Erwärmen des Behältnisses erfolgt, dabei jedoch dieses Aufblasen werkzeugfrei erfolgt, wird im Rahmen der vorliegenden Erfindung vorgeschlagen, bei diesem Vorgang vielmehr ein mechanisches Dehnen des Kunststoffvorformlings in dessen Längsrichtung, beispielsweise unter Zuhilfenahme einer Reckstange, vorzunehmen.

Bei bisher bekannten Blasmaschinen werden die Kunststoffvorformlinge durch einen Ofen gefahren und dabei über die ganze Länge komplett erwärmt. Lediglich durch Steuerung der Heizleistung in den Erwärmungszonen lassen sich Temperaturunterschiede auf die Kunststoffvorformlinge auftragen, die sich beim Aufblasen des Kunststoffvorformlings zu Flaschen in den Wandstärken der einzelnen Zonen niederschlagen.

Damit wird erfindungsgemäß vorgeschlagen, die Funktionen des Reckens und Erwärmens zusammenzulegen, so dass in der Heizeinrichtung die letztendlich erreichten Wanddicken schon bei der so entstehenden Vorblasflasche bestimmt werden und auf diese Weise die Flaschenqualität erhöht wird.

Bei einer bevorzugten Ausführungsform handelt es sich bei der Heizeinrichtung um eine Mikrowellenheizeinrichtung bzw. die Heizeinrichtung weist eine Mirkowellenheizeinrichtung auf. Vorzugsweise wird der Kunststoffvorformling durch einen Resonator dieser Mikrowellenheizeinrichtung gefahren. In diesem Falle kann dieser Kunststoffvorformling synchron erwärmt, gereckt und ggf. auch vorgeblasen werden.

Vorzugsweise ist die Heizeinrichtung derart gestaltet, dass sie lediglich ausgewählte Bereiche des Kunststoffvorformlings, beispielsweise einen Bereich unterhalb des Tragerings des Kunststoffvorformlings, erwärmt und andere Bereiche gezielt von der Erwärmung ausnimmt. So könnte beispielsweise auch der Bodenbereich des Kunststoffvorformlings von der Erwärmung ausgenommen werden.

Seitens der Anmelderin wurde erkannt, dass es in vielen Fällen vorteilhaft ist, den Boden des Kunststoffvorformlings nicht zu erwärmen. So ist es möglich, den Boden des Kunststoffvorformlings, der im Allgemeinen schlechter zu verstrecken ist, direkt mit weniger Material zu spritzen, da die Reckstange den kalten Boden nicht durchstoßen kann. Auf diese Weise wäre es auch möglich, auf eine nachträgliche Bodenkühlung zu verzichten. Weiterhin ist es möglich, einen sehr dünnen Boden in einem herkömmlichen Spritzgussverfahren herzustellen, die Herstellung eines sehr dünnen Bodens ohne Anspritzpunkt ist im Compression-Molding-Verfahren möglich.

Bei einer weiteren vorteilhaften Ausführungsform weist die Vorrichtung eine Vielzahl von Aufnahmeelementen zur Aufnahme der Kunststoffvorformlinge auf, wobei die Kunststoffvorformlinge innerhalb dieser Aufnahmeelemente erwärmbar sind. Während bei Heizeinrichtungen nach dem Stand der Technik üblicherweise die Kunststoffvorformlinge gemeinsam einen Heizraum durchlaufen und auch gemeinsam in diesem Heizraum erwärmt werden, wird hier vorgeschlagen, Aufnahmeelemente bzw. Heizkavitäten für die einzelnen Kunststoffvorformlinge vorzusehen, in denen diese individuell erwärmt werden.

Bei diesen Aufnahmeelementen handelt es sich bevorzugt um Aufnahmeelemente, welche zumindest einen Bereich der Kunststoffvorformlinge in dessen Längsrichtung vollständig umgeben, beispielsweise dessen Bereich unterhalb des Tragrings und ggfs. oberhalb des Bodens. So könnten jedem Kunststoffvorformling individuell zugeordnete einzelne Kavitäten vorgesehen sein. Bei diesen Kavitäten könnte es sich um Heiztaschen mit IR - Heizelementen handeln aber auch um solche Heizelemente, welche die Kunststoffvorformlinge durch den Einsatz von Mikrowellen erwärmen. Auch wäre eine Kombination aus IR- und Mikrowellenheizeinrichtungen denkbar.

Bei einer weiteren vorteilhaften Ausführungsform weist die Transporteinrichtung einen drehbaren Träger zum Transportieren der Kunststoffvorformlinge auf. So könnte es sich bei der Vorrichtung um einen sog. Rundläuferofen handeln, bei dem die Kunststoffvorformlinge (getaktet oder insbesondere kontinuierlich) auf einer Kreisbahn transportiert werden.

Weiterhin weist vorteilhaft die erfindungsgemäße Vorrichtung eine Blaseinrichtung auf, um den Kunststoffvorformling mit einem gasförmigen Medium und insbesondere mit Druckluft zu beaufschlagen. Auf diese Weise erlaubt die erfindungsgemäße Vorrichtung ein synchrones Recken, Erwärmen und Vorblasen des Kunststoffvorformlings. Dabei dient vorzugsweise das Vorblasen auch dem Zweck, um den Kunststoffvorformling beispielsweise von einer entsprechenden Reckstange während des Reckens beabstandet zu halten.

Bei einer weiteren vorteilhaften Ausführungsform weist die Vorrichtung ein Wanddickenmessgerät auf, welches eine Wandungsdicke des Kunststoffvorformlings bestimmt. Dieses Wanddickenmessgerät kann dabei oberhalb oder unterhalb des Resonators positioniert werden und auf diese Weise die so gemessenen Wanddicken ermitteln. Vorteilhaft weist die Vorrichtung auch eine Steuerungseinrichtung zum Steuern des Umformungsvorgangs auf, die vorteilhaft in Abhängigkeit von dem Wanddickenmessgerät gemessener Werte, beispielsweise in Abhängigkeit gemessener Wanddickenwerte, die Vorrichtung steuert und beispielsweise die Mikrowelleneinrichtung beeinflusst oder auch den Transport der Behältnisse durch die Mikrowelleneinrichtung beeinflusst und dergleichen.

Damit weist vorteilhaft die Vorrichtung auch eine Transporteinrichtung auf, welche die Behältnisse durch die Heizeinrichtung transportiert. Vorteilhaft transportiert die Transporteinrichtung die Behältnisse in deren Längsrichtung durch die Heizeinrichtung.

Bei einer weiteren vorteilhaften Ausführungsform weist die Streckeinrichtung eine Reckstange auf, welche in den Kunststoffvorformling einführbar ist. Diese Reckstange ist an sich aus dem Stand der Technik bekannt, jedoch wird sie im Stand der Technik ausschließlich im Zusammenhang mit Blasmaschinen eingesetzt, welche bereits erwärmte Kunststoffvorformlinge expandieren. Es wäre jedoch auch möglich, andere Streckeinrichtungen einzusetzen, beispielsweise unter Verbindung mit Greifelementen, welche einen Bodenbereich des Kunststoffvorformlings greifen und diesem gegenüber dem Gewinde dehnen.

Bei einer bevorzugten Ausführungsform ist die Reckstange aus einem Kunststoff gefertigt. Dies ist insbesondere dann vorteilhaft, wenn es sich bei der Heizeinrichtung um eine Mikrowelleneinrichtung handelt, da diese von einer metallischen Reckstange beeinflusst würde. Es wäre jedoch auch möglich, die Reckstange gezielt aus einem Metall zu formen, um die Feldverteilung der Mikrowellenheizeinrichtung zu beeinflussen.

Weiterhin weist die Vorrichtung bevorzugt eine Temperaturmesseinrichtung auf, welche Temperaturen des Kunststoffvorformlings bestimmt, wobei hier insbesondere eine Bestimmung lokaler Temperaturen des Kunststoffvorformlings ermöglicht ist. Auch wäre es möglich, dass bei einem Wiederherausziehen des Kunststoffvorformlings aus dem Resonator zusätzlich die Temperatur bestimmt und vorteilhaft auch nachgeregelt wird. Daneben kann hier auch die Wanddicke und der Querschnitt der Vorblasflasche gemessen werden.

Wenn, wie oben erwähnt, der Kunststoffvorformling nur bereichsweise erwärmt wird, so dass ein Bereich desselben kalt ist, während eine bestimmte Schicht in dessen Längsrichtung erwärmt ist, kann auf diese Weise der Halsabzug erleichtert werden, insbesondere, wenn zunächst der Kunststoffvorformling unter dem Tragring erwärmt wird, anschließend gereckt und erst dann weiter erwärmt wird. In diesem Falle wird ein Erwärmungsvorgang vor und nach dem eigentlichen Reckvorgang durchgeführt. Gleichzeitig sind jedoch die Erwärmungseinrichtung und die Reckeinrichtung geometrisch derart angeordnet, dass auch eine gleichzeitige Durchführung des Reckens und des Erwärmens möglich ist. Damit ist die Anordnung insbesondere auch derart gestaltet, dass innerhalb eines Gesamtzeitabschnitts, in dem eine Erwärmung durchgeführt wird, auch ein Reckvorgang durchgeführt wird.

Bei einer bevorzugten Ausführungsform ist jeder Kunststoffvorformling einer separaten Heizeinrichtung zugeordnet. Auf diese Weise kann die Regelung unabhängig von bei der Herstellung der Kunststoffvorformlingen auftretenden geometrischen und materialbezogenen Schwankungen eine konstante Qualität der Behältnisse gewährleistet werden. Dies kann einerseits auf den schon angesprochenen Mikrowellenresonator als auch auf eine Heiztasche mit darin angeordneten Infrarotstrahlern zutreffen. Die Infrarotstrahler in der Heiztasche sind dabei bevorzugt in einer Umfangsrichtung um den Kunststoffvorformling angeordnet.

In einer bevorzugten Ausführungsform weist die Heizeinrichtung einen im Wesentlichen geschlossenen Strahlungstunnel auf, durch den die Transporteinrichtung die Vorformlinge transportiert. Im Strahlungstunnel ist dabei eine Vielzahl von Infrarotstrahlern und zugehörigen Reflektoren angeordnet, die die Kunststoffvorformlinge erwärmen. Die Infrarotstrahler sind über die Steuerungseinrichtung mit der Temperaturmesseinrichtung und/oder dem Wanddickenmessgerät verbunden. Somit kann aufgrund der gemessenen Daten eine Heizleistung jedes einzelnen Strahlers auf einen benötigten Wert eingestellt werden.

Vorteilhaft weist die Vorrichtung eine Dreheinrichtung auf, welche die Kunststoffvorformlinge um deren Längsachse dreht. Diese Ausführungsform ist besonders günstig, um in Umfangsrichtung eine gleichmäßige Erwärmung der Kunststoffvorformlinge zu erreichen.

Bei einer weiteren bevorzugten Ausführungsform sind die Streckeinrichtung und die Heizeinrichtung in einem gemeinsamen Modul angeordnet. Dabei wäre es beispielsweise möglich, dass die Streckeinrichtung innerhalb einer Heizeinrichtung wie beispielsweise einem Heiztunnel angeordnet ist. Vorteilhaft ist eine Vielzahl von Streckeinrichtungen innerhalb der Heizeinrichtung angeordnet.

Die vorliegende Erfindung ist weiterhin auf eine Anlage zum Umformen von Kunststoffvorformlingen zu Kunststoffbehältnissen gerichtet, welche eine Vorrichtung der oben beschriebenen Art aufweist, sowie eine dieser Vorrichtung nachgeordnete Umformungseinrichtung, welche die in der Vorrichtung erzeugten Behältnisse zu Kunststoffbehältnissen umformt. Dabei wird darauf hingewiesen, dass, wie oben erwähnt, die Vorrichtung die Kunststoffvorformlinge zu Zwischenbehältnissen umformt und die nachgeordnete Umformungseinrichtung wiederum diese Zwischenbehältnisse auf ihre endgültige Form bringt.

Vorteilhaft ist die Umformungseinrichtung reckstangenfrei ausgebildet.

Die vorliegende Erfindung ist weiterhin auf ein Verfahren zum Umformen von Kunststoffbehältnissen gerichtet, wobei Kunststoffvorformlinge transportiert und mittels einer Heizeinrichtung erwärmt werden und wobei die Kunststoffvorformlinge mittels einer Streckeinrichtung in ihrer Längsrichtung gedehnt werden, wobei die Streckeinrichtung mechanisch auf die Kunststoffvorformlinge zu deren Dehnung einwirkt. Erfindungsgemäß wird ein Erwärmen der Kunststoffvorformlinge vor und nach dem Dehnen der Kunststoffvorformlinge (10) durchgeführt wird.

Dabei ist es möglich, dass in einer ersten Erwärmungsstufe der Vorformling erwärmt wird, anschließend gedehnt wird und in einer weiteren Erwärmungsstufe, auf welche vorteilhaft ein Blasformungsschritt folgt, erneut erwärmt wird. Es wäre jedoch auch möglich, dass die Erwärmung auch während des Dehnvorgangs erfolgt. Bevorzugt werden vor dem Dehnen zumindest teilweise andere Bereiche des Kunststoffvorformlings erwärmt als nach dem Dehnen. Dies bedeutet, dass sich die zu erwärmenden Bereiche vor und nach dem Dehnvorgang zumindest teilweise unterscheiden. Auch wäre es möglich, dass sich die auf die jeweiligen Bereiche aufgebrachten Heizleistungen vor und nach dem Dehnvorgang unterscheiden.

Auch wäre es möglich, dass eine erste Heizeinrichtung den Kunststoffvorformling, insbesondere unterhalb seines Gewindes, einheitlich erwärmt und eine zweite Heizeinrichtung gezielt bestimmte Bereiche des Kunststoffvorformlings, wie etwa einen Bereich direkt unterhalb des Tragrings, erwärmt.

Vorteilhaft erfolgen das Dehnen und das Erwärmen der Kunststoffvorformlinge wenigstens zeitweise zeitgleich. Hierunter ist zu verstehen, dass beispielsweise ein Erwärmungsvorgang in einem vorgegebenen Zeitintervall abläuft, wobei innerhalb dieses Zeitintervalls auch unterbrochen werden kann und der Reckvorgang ebenfalls zumindest zeitweise innerhalb dieses Intervalls, jedoch insbesondere zeitgleich mit dem Heizvorgang, durchgeführt wird. Somit wird auch ein schrittweises Erwärmen mit dazwischen geschaltenen Dehnungen des Kunststoffvorformlings ermöglicht.

Vorzugsweise werden die Kunststoffvorformlinge um ihre Längsachse oder eine zu dieser Längsachse parallele Achse gedreht.

Bei einem weiteren vorteilhaften Verfahren ist eine Vorblasform innerhalb des Resonators vorgesehen, mit der auch im Rahmen des Vorblasprozesses die Kunststoffvorformlinge auf eine Vorform expandiert werden.

Bei einem weiteren vorteilhaften Verfahren ist eine Vorblasform innerhalb der Heiztasche vorgesehen, mit der auch im Rahmen des Vorblasprozesses die Kunststoffvorformlinge in eine Vorblasform expandiert werden.

Insbesondere ist die Vorblasform für eine Ausgestaltung des Bodens des Behältnisses vorgesehen. Diese Vorblasform besteht vorzugsweise aus Kunststoff. Die Vorblasform kann mittels eines eigenen Antriebs zum Entfernen der Vorblasflasche aus der Heizeinrichtung entfernt und später wieder zugestellt werden.

Vorteilhaft ist auch hier die Reckstange aus einem Kunststoff oder allgemein aus einem nichtmetallischen Material geformt. Besonders bevorzugt ist auch die Vorblasform aus einem Kunststoff hergestellt. Als Material wäre jedoch auch beispielsweise Keramik denkbar.

Bei einem weiteren vorteilhaften Verfahren verbleiben die Reckstangen während der Rotation im Inneren der Kunststoffvorformlinge. Auf diese Weise ist es möglich, Heizkästen oder Heizeinrichtungen näher an den Kunststoffvorformling anzuordnen, wodurch sich eine höhere Effizient des Verfahrens ergibt.

Bei einem weiteren vorteilhaften Verfahren steuert eine Steuerungseinrichtung den Umformungsvorgang in Abhängigkeit von einer Wandungsdicke der Kunststoffvorformlinge. Dies bedeutet, dass die Wandungsdicke der Kunststoffvorformlinge vorteilhaft bereichsabhängig gemessen wird und in Abhängigkeit von diesen Messergebnissen der Umformungsvorgang, beispielsweise die Wärmeeinwirkung oder auch die Transportgeschwindigkeit, verändert werden. Vorteilhaft transportiert eine Transporteinrichtung die Behältnisse wenigstens zeitweise in ihrer Längsrichtung. So können von einer Messeinrichtung ausgegebene Werte an einen Vorschub weitergegeben werden, der entsprechend die Bewegung des Vorformlings (durch den Resonator) steuert.

Bei einem weiteren vorteilhaften Verfahren steuert die Steuerungseinrichtung den Umformungsvorgang - insbesondere zumindest vor der endgültigen Ausformung der Kunststoffvorformlinge- in Abhängigkeit von der gemessenen Wandungsdicke und/oder der gemessenen Temperaturverteilung der Kunststoffvorformlinge. Unter der endgültigen Ausformung der Kunststoffvorformlinge wird dabei insbesondere die endgültige Form verstanden, welche die Kunststoffbehältnisse nach dem abgeschlossenen Umformungsvorgang aufweisen, wie etwa die Gestalt der fertig geblasenen Flasche.

Vorteilhaft gestaltet sich auch eine Steuerung in Abhängigkeit von einer Kamera aufgenommenen und ausgewerteten Bilder der Kunststoffvorformlinge oder Vorblasflaschen. Vorteilhaft können so unter anderem auch eine Reckgeschwindigkeit oder ein Vorblasdruck verändert werden.

Weitere Vorteile und Ausführungsformen ergeben sich aus den beigefügten Zeichnungen:
Darin zeigen:
   - Fig. 1: eine Darstellung einer Erwärmungsvorrichtung nach dem Stand der Tech- nik;
   - Fig. 2: eine schematische Darstellung einer Mikrowellenheizeinrichtung;
   - Fig. 3a: eine perspektivische Darstellung einer erfindungsgemäßen Vorrichtung in einem ersten Zustand;
   - Fig. 3b: eine perspektivische Darstellung einer erfindungsgemäßen Vorrichtung in einem zweiten Zustand;
   - Fig. 4: eine Schnittdarstellung einer erfindungsgemäßen Vorrichtung;
   - Fig. 5a - 5e: Darstellungen zur Veranschaulichung eines Umformungsprozesses;
   - Fig. 6: eine Detaildarstellung einer weiteren erfindungsgemäßen Ausführungs- form; und
   - Fig. 7a - 7e: Darstellung zur Veranschaulichung eines weiteren erfindungsgemäßen Verfahrens.

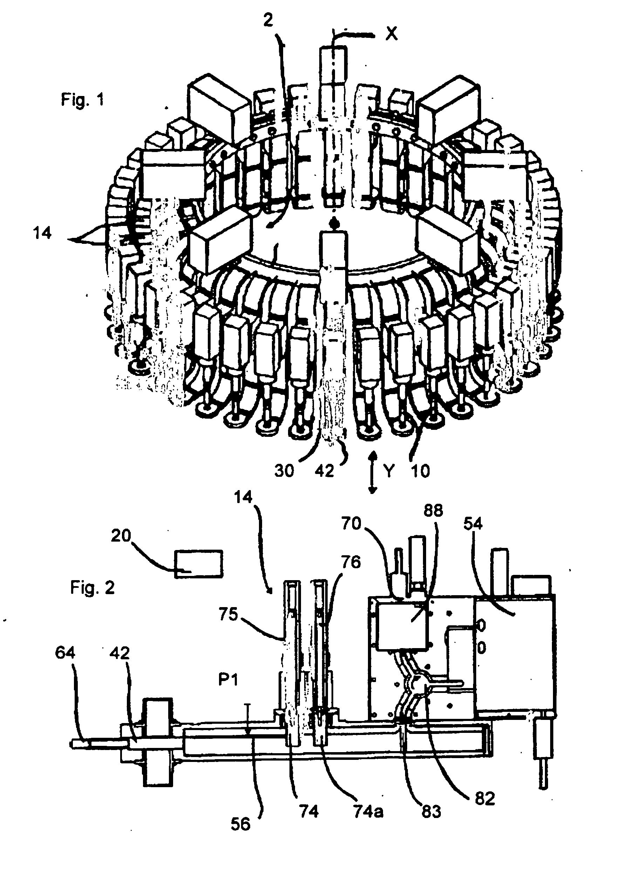

Figur 1 zeigt eine Vorrichtung nach dem Stand der Technik. Dabei ist eine Transporteinrichtung 2 vorgesehen, welche die einzelnen Kunststoffvorformlinge 10 hier in Umfangsrichtung (um eine Drehachse X) bewegt. Weiterhin ist eine Vielzahl von Heizeinrichtungen 4 vorgesehen, welche jeweils Resonatoren 42 aufweisen, um die Kunststoffvorformlinge zu erwärmen. Leistungsregelungselemente 14 sind jeweils an den einzelnen Heizeinrichtungen vorgesehen. Die Behältnisse werden zur Erwärmung in der Richtung Y gegenüber den Resonatoren verschoben.

Figur 2 zeigt eine schematische Darstellung einer erfindungsgemäßen Mikrowellenheizeinrichtung. Diese Vorrichtung weist ein Magnetron 54 auf, in welches bereits eine Heizeinrichtung (nicht gezeigt) integriert ist. In diesem Magnetron 54 werden die Mikrowellen erzeugt und in einen Zirkulator 82 geleitet. Ausgehend von diesem Zirkulator werden die Mikrowellen mit Hilfe einer Einkoppeleinrichtung 83 in eine Leitungseinrichtung 56 in Form eines Mikrowellenhohlleiters bzw. Rechteckhohlleiters eingeleitet. Von dort gelangen die Mikrowellen in einen Resonator 42 bzw. die innerhalb dieses Resonators angeordneten (nicht gezeigten) Behältnisse 10. Die Behältnisse werden hier in Richtung des Pfeils P1 in den Resonator 42 eingeschoben.

Das Bezugszeichen 84 bezieht sich auf ein Pyrometer, welches an dem Resonator angeordnet ist und berührungslos die Temperatur der Vorformlinge misst. Die von den Behältnissen zurück gelangenden Mikrowellen gelangen wiederum in den Zirkulator und von dort in eine Wasserlast 88. Diese Wasserlast 88 dient zum Dämpfen der Mikrowellen. Mit Hilfe einer Sensoreinrichtung 70 in Form einer Diode kann die rücklaufende Mikrowellenenergie gemessen werden. Die gemessenen Werte werden wiederum von einer Steuerungseinrichtung 20 aufgenommen und zur Leistungsabstimmung verwendet. Es wäre jedoch auch möglich, neben oder anstelle der von der Sensoreinrichtung gemessenen Werte die von dem Pyrometer 84 ausgegebenen Werte zur Leistungs- bzw. Energieabstimmung zu verwenden. Daneben könnte das Pyrometer auch verwendet werden, um die Erwärmungsphase zu verändern.

Die Bezugszeichen 74 und 74a beziehen sich auf Regulierkörper bzw. Regulierstifte zum Regulieren der Leistung der Mikrowellenheizeinrichtung und das Bezugszeichen 76 auf eine Antriebseinrichtung zum Bewegen der Stifte 74 und 74a.

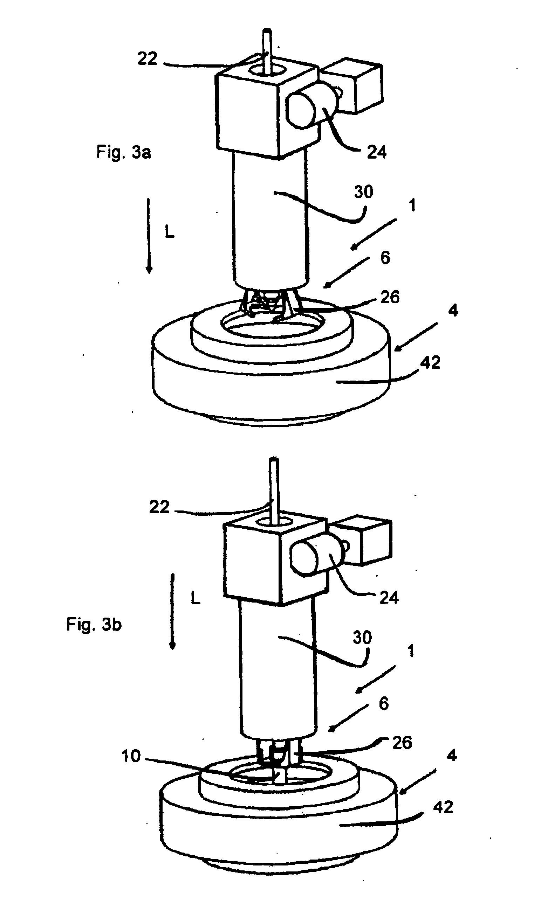

Figur 3a zeigt eine perspektivische Darstellung einer erfindungsgemäßen Vorrichtung 1. Diese Vorrichtung weist dabei eine Heizeinrichtung 4 auf, von der jedoch lediglich ein Mikrowellenresonator 42 dargestellt ist. Die umzuformenden Vorformlinge werden in ihrer Längsrichtung L durch diesen Resonator 42 gefördert und dort erwärmt. Das Bezugszeichen 6 bezieht sich auf eine Reckeinrichtung, welche hier zwei Greifelemente 26 aufweist, welche den Kunststoffvorformling unterhalb seines Tragrings halten. Zu diesem Zweck schwenken die beiden dargestellten Greifelemente 26 nach innen und umschließen so den Vorformling unterhalb seines Tragrings. Anschließend kann der Vorformling durch eine sich in der Längsrichtung L bewegende Reckstange 22 gedehnt werden. Das Bezugszeichen 24 kennzeichnet eine Antriebseinrichtung, um ein Gehäuse 30 ebenfalls in der Längsrichtung L zu bewegen.

Bei der Antriebseinrichtung 24 handelt es sich vorzugsweise um einen Servoantrieb mit Getriebe.

Fig. 3b zeigt die Vorrichtung aus Fig. 3a, wobei hier jedoch die Greifelemente 26 eingeschwenkt sind und ein Behältnis 10 greifen.

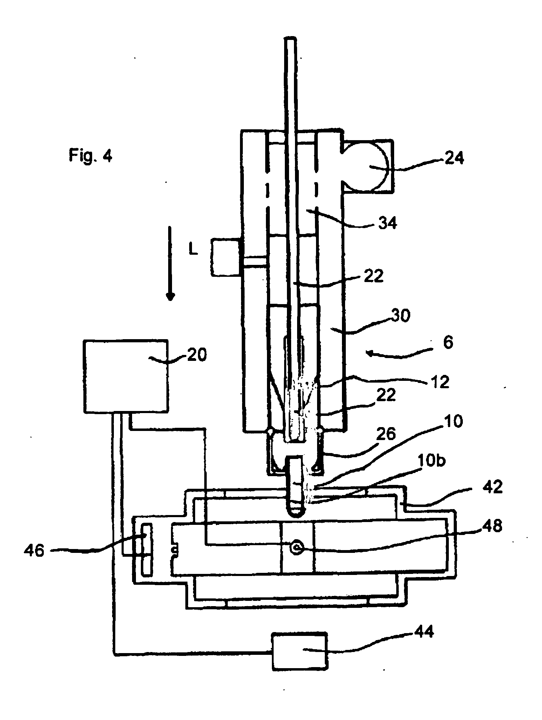

Figur 4 zeigt eine Schnittdarstellung der erfindungsgemäßen Vorrichtung 1. Man erkennt hier weiterhin einen Motor, insbesondere einen Linearmotor 34, der zur Bewegung der Reckstange 22 insbesondere gegenüber dem Gehäuse 30 vorgesehen ist. Diese Komponenten sind Bestandteile der insgesamt mit 6 gekennzeichneten Streckeinrichtung.

Die Greifelemente 26 sind schwenkbar an diesem Gehäuse 30 angeordnet und werden daher mit diesen mitbewegt. Wie in Figur 4 gezeigt, kann auf diese Weise der gesamte Vorformling 10 gegenüber dem Resonator 42 der Heizeinrichtung 4 verschoben werden. Das Bezugszeichen 12 bezieht sich auf eine Blaseinrichtung, um den Vorformling 10 mit Druckluft zu beaufschlagen. Damit weist die erfindungsgemäße Vorrichtung im Gegensatz zum Stand der Technik ein anderes Greifsystem für die Behältnisse auf, daneben ist auch ein zusätzlicher Ventilblock und, wie erwähnt, die Reckstange 22 vorgesehen. Es wäre auch möglich, dass das erfindungsgemäße Verfahren und die Vorrichtung auf herkömmliche Öfen anzuwenden, d. h. auf lineare Infrarotöfen, hierzu wären jedoch Umrüstungen des Systems erforderlich.

Das Bezugszeichen 48 bezieht sich auf einen Sensor zur Schichtdickenmessung. Im Einzelnen kann die Wandungsdicke eines Grundkörpers 10b des Vorformlings mit Hilfe dieses Sensors 48 insbesondere berührungslos vermessen werden. Das Bezugszeichen 46 bezieht sich auf eine Temperaturmesseinrichtung, welche ebenfalls berührungslos die Temperatur des Vorformlings 10 bestimmt. Dabei kann bevorzugt die Temperatur ortsaufgelöst gemessen werden. Das Bezugszeichen 44 bezieht sich auf einen Sensor zur Bodenuntersuchung des Vorformlings.

Eine Steuerungseinrichtung 20 empfängt die jeweils von den Sensoren 44, 46, 48 ermittelten Daten und kann auf Basis dieser Daten einerseits eine Resonatorleistung der Heizeinrichtung 4 steuern, andererseits jedoch auch die Antriebseinrichtungen 24 und 34 um auf diese Weise den Umformungsvorgang zu modifizieren. Damit wird hier ein Regelkreis vorgeschlagen, der in eine Regelung des Umformungsvorgangs auch Messergebnisse der Wanddickenmessung, der Bodenmessung sowie der Temperaturmessung des Vorformlings 10 mit einbezieht.

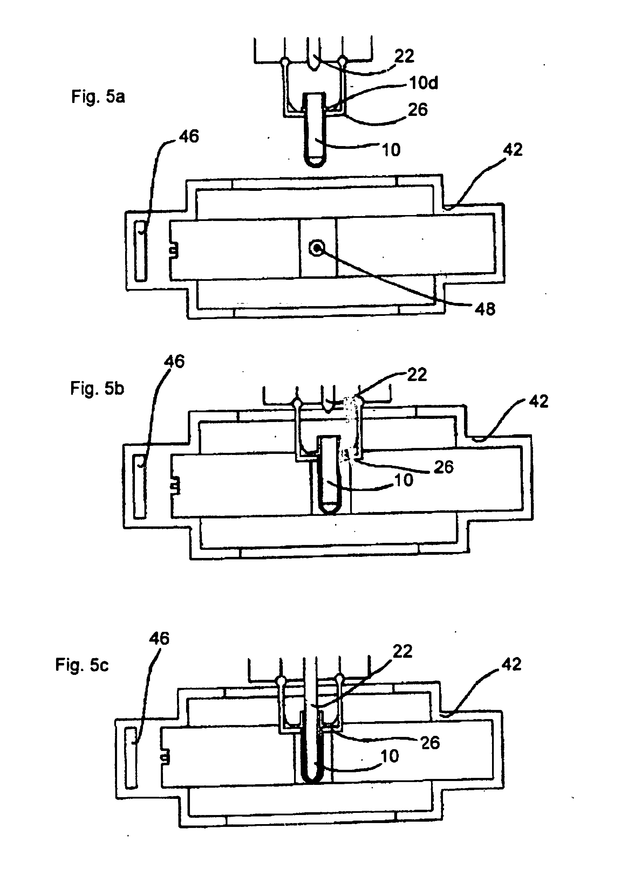

Die Figuren 5a - 5e beschreiben die Verfahrensschritte eines erfindungsgemäßen Verfahrens. Bei dem in Fig. 5a gezeigten Verfahrensschritt ist der Kunststoffvorformling noch außerhalb des Resonators 42, wird jedoch bereits von den Greifeinrichtungen 26 unterhalb seines Tragrings 10d gehalten. Auch die Reckstange 22 ist in diesem Zustand noch nicht in den Kunststoffvorformling eingetreten.

Bei der in Fig. 5b gezeigten Situation ist der Kunststoffvorformling 10 bereits vollständig in den Resonator 42 eingefahren, die Reckstange 22 jedoch noch nicht in das Behältnis. Es wäre jedoch auch möglich, dass zur Zeitersparnis während eines Einfahrens des Behältnisses in den Resonator auch die Reckstange 22 bereits teilweise bzw. so weit in das Behältnis einfährt, dass sie noch nicht in Kontakt mit einer Innenwandung des Behältnisses bzw.
(Kunststoff)Vorformlings steht.

Die Reckstange 22 ist bevorzugt mit einer Beschichtung, insbesondere mit einer Teflonbeschichtung, versehen, die ein Ankleben des Vorformlings 10 an der Reckstange 22 verhindert. Somit kann ein Entfernen der Reckstange 22 aus dem Inneren des Vorformlings 10 ohne zusätzliche Deformation des Vorformlings 10 gewährleistet werden.

Bei der in Fig. 5c gezeigten Situation ist die Reckstange 22 vollständig in das Behältnis 10 eingedrungen und kann in diesem Moment mit dem Dehnungsvorgang beginnen. In dem Resonator 42 wird das Behältnis 10 mit Mikrowellen beaufschlagt und so erwärmt.

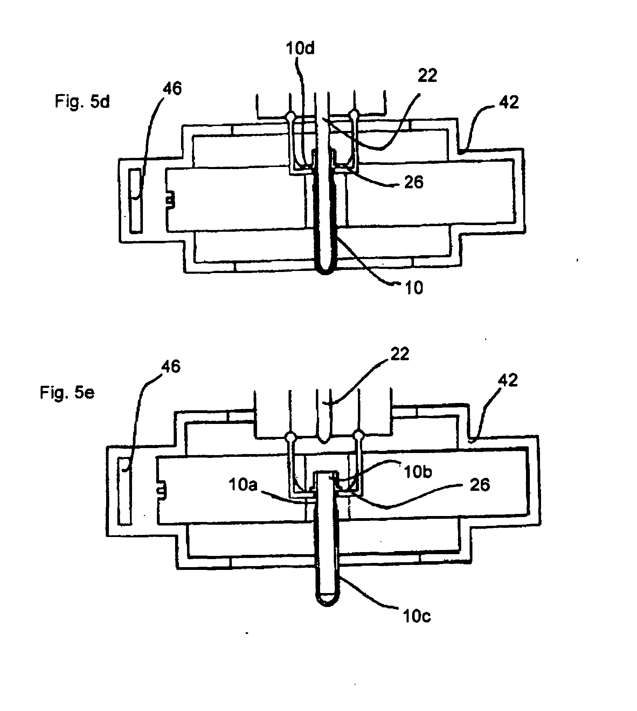

Bei der in Fig. 5d gezeigten Situation wurde der Kunststoffvorformling gedehnt, wobei der Resonator hier so ausgeführt ist, dass insbesondere eine Erwärmung in dem Bereich unterhalb des Tragrings 10d auftritt, so dass dieser Bereich insbesondere erwärmt wird und sich damit ausdehnt. Man erkennt daher den hier verstreckten Bereich 10a unterhalb des Tragrings 10d. Die übrigen Bereiche des Vorformlings 10 werden nicht oder weniger erwärmt, so dass sie sich durch Einwirkung der Reckstange 22 auch nur weniger ausdehnen.

Bei der in Fig. 5e gezeigten Situation ist der Dehnungsvorgang abgeschlossen und die Reckstange 22 wieder zurückgezogen. Anschließend kann der Kunststoffvorformling 10 aus dem Resonator entnommen werden und an eine weitere Blasstation übergeben werden, in der der so teilverstreckte Vorformling zu einem Kunststoffbehältnis expandiert wird.

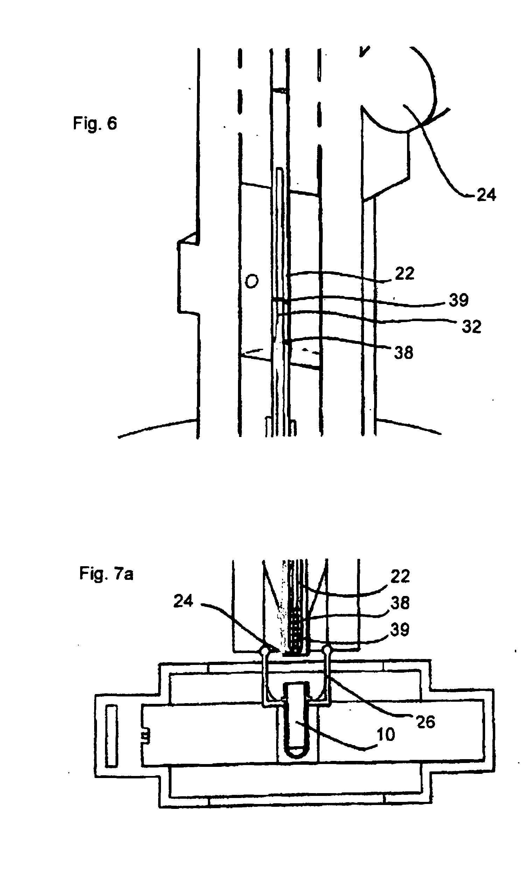

Figur 6 zeigt eine weitere Ausführungsform einer erfindungsgemäßen Vorrichtung. Bei dieser Ausführungsform weist die Reckstange 22 in ihrem Inneren einen Kanal 32 mit mehreren Seitenkanälen 38 und 39 auf. Auf diese Weise kann die Reckstange mit einem gasförmigen Medium beaufschlagt werden, so dass nach dem Einfahren der Reckstange 22 in den Kunststoffvorformling 10 auch Druckluft auf diesen ausgegeben werden kann. Durch Beauschlagung mit dieser Druckluft kann ein Ankleben des Vorformlings 10 an der Reckstange 22 während dessen Längsdehnung verhindert werden. Auch wäre es bei dieser Variante möglich, dass in dem Resonator bereits eine Vorblasform vorliegt, gegen welche der Kunststoffvorformling expandiert werden kann. In einem anschließenden Hauptblasvorgang könnte der Kunststoffvorformling auf seine endgültige Form gebracht werden.

So wäre es möglich, dass eine derart erzeugte Vorblasflasche an ein Blasmodul übergeben und dort fertig geblasen wird. Vorteilhaft ist in einem solchen Blasprozess dann kein Recken mehr erforderlich.

Die in Fig. 3 gezeigten Greifelemente 26 entsprechen auch bei dieser Ausführungsform den dort gezeigten. Zur Steuerung dieser Greifelemente 26 könnten Kurvensteuerungen verwendet werden, es wäre jedoch auch möglich, dass federnde Elemente für die Klammer zum Öffnen und Schließen vorgesehen sind. Weiterhin wäre auch eine magnetische Ansteuerung für diese Greifelemente 26 denkbar oder elektromotorische Antriebe.

Die Figuren 7a - 7e zeigen mehrere Verfahrensschritte in der Verwendung einer Luftbeaufschlagung. Bei der in Fig. 7a gezeigten Situation ist der Kunststoffvorformling 10 zwar bereits in den Resonator 42 eingefahren, die Reckstange jedoch noch außerhalb desselben angeordnet. Man erkennt, dass die Reckstange hier auch eine Bodenöffnung 49 aufweist, durch welche hindurch eine Beaufschlagung des Kunststoffvorformlings 10 möglich ist.

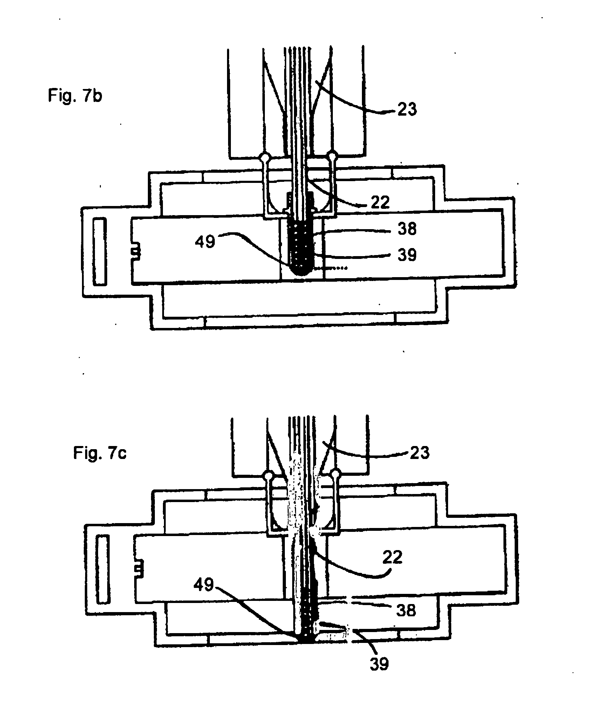

Bei der in Fig. 7b gezeigten Situation ist die Reckstange 22 vollständig in das Behältnis 10 eingefahren und kann mit dem Expansionsvorgang beginnen. Bei der in Fig. 7c gezeigten Situation dehnt die Reckstange den Vorformling 10 und beaufschlagt gleichzeitig dessen Innenraum mit Luft, so dass das Ankleben des Kunststoffvorformlings 10 an der Reckstange 22 verhindert wird. Zudem ist erkennbar, dass die Blasdüse 23 auf dem Tragring 10d des Vorformlings 10 aufsitzt, um diesen abzudichten. Die Expansion kann sowohl über die Blasdüse 23 als auch über die Reckstange 22 erfolgen.

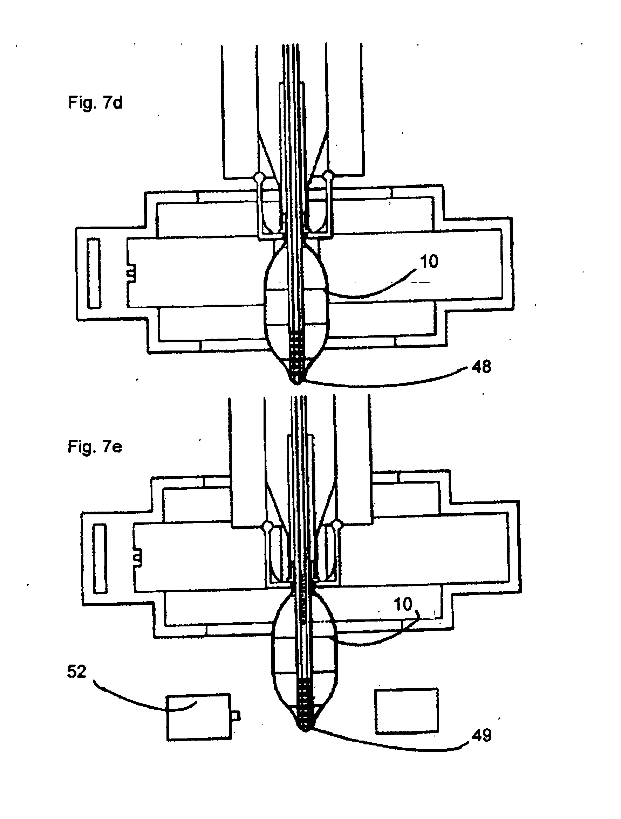

Bei der in Fig. 7d gezeigten Situation wird über die Reckstange weiterhin Luft zugeführt, so dass sich der Kunststoffvorformling auch in seiner radialen Richtung ausdehnt. In diesem Fall könnte, wie oben erwähnt, eine Vorform innerhalb des Resonators vorgesehen sein.

Bei der in Fig. 7e gezeigten Situation fährt das Gehäuse 30 mit den Greifeinrichtungen und den Behältnis noch weiter in den Resonator, so dass ein größerer Teil des Behältnisses 10 nach unten aus dem Resonator herausragt. Das Bezugszeichen 52 in Fig. 7e bezieht sich auf eine Bildaufnahmeeinrichtung, welche den Vorblasvorgang inspiziert. Es ist weiterhin möglich, dass sich das vollständige Gehäuse 30 dreht, um auf diese Weise auch eine Drehung des Kunststoffbehältnisses 10 zu erreichen. Es wäre auch denkbar, anstelle des Bildaufnahmegerätes 52 ein Wanddickenmessgerät und/oder ein Temperaturmessgerät einzusetzen. Die Daten aus der an der Vorblasflasche 10 durchgeführten Messungen können zum Zweck einer Nachreglung ebenfalls an die Steuerungseinrichtung 20 weitergegeben. Bei der Nachregelung können die Temperaturen einzelner Bereiche, aber auch die Dehnung einzelner Bereiche durch ein nochmaliges Heizen oder Recken der Vorblasflasche 10 eingestellt werden. Hierzu transportiert die Transporteinrichtung 2 die Vorblasflasche nochmals durch die Heizeinrichtung 4 und die Schritte aus den Figuren 5a bis 5e bzw. 7a bis 7e können sich wiederholen. Im Gegenzug wäre es auch denkbar, eine im Druck gesteuerte Kühlung an der Vorblasflasche 10 über die Bohrungen der Reckstange 38, 39, 49 und dem Auslass über die Blasdüse 23 durchzuführen, falls gewisse Bereiche der Vorblasflasche 10 zu stark erhitzt werden.

Die Streckeinrichtung 6, Bestandteile hiervon und/oder die Reckstange 22 könnten selbst temperiert bzw. gekühlt werden, um ein Ankleben des Materials der Kunststoffvorformlinge hieran während des Streckvorgangs zu verhindern. Weiterhin könnten die Streckeinrichtung 6 oder die Reckstange 22 Luftlöcher aufweisen. Weiterhin wäre es möglich, vor dem Expandieren mit dem Vorblasdruck ein weiteres niedrigeres Druckniveau (Stützdruck) vorzusehen, welches dazu dient, ein Ankleben der Kunststoffvorformlinge zu verhindern. Ein derartiger Stützdruck könnte dabei beispielsweise zwischen 0,1 bar und 5 bar liegen.

Schließlich wäre es auch möglich, den Kunststoffvorformling mittels einer Greifeinrichtung zu dehnen, welche den Kunststoffvorformling (insbesondere von aussen) an seinem unteren Ende bzw. Bodenbereich greift und in der Längsrichtung des Kunststoffvorformlings dehnt. Dabei könnte eine Greifeinrichtung vorgesehen sein, welche den Kunststoffvorformling mechanisch greift, es wäre jedoch auch ein "Greifen" bzw. Dehnen über ein Vakuum denkbar, welches auf den Bodenbereich der Kunststoffvorformlinge aufgebracht wird. In diesem Fall würde diese Greifeinrichtung oder die Vakuumbeaufschlagungseinrichtung die erfindungsgemäße Streckeinrichtung darstellen.

Die Anmelderin behält sich vor, einzelne oder sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Transporteinrichtung
- 4: Heizeinrichtung
- 6: Reckeinrichtung
- 10: (Kunststoff)vorformling, Behältnis, Vorblasflasche
- 10a: verstreckter Bereich
- 10b: Grundkörper
- 10d: Tragring
- 12: Blaseinrichtung
- 14: Leistungsregelungselemente
- 20: Steuerungseinrichtung
- 22: Reckstange
- 23: Blasdüse
- 24: Antriebseinrichtung
- 26: Greifelemente
- 30: Gehäuse
- 32: Kanal
- 34: Linearmotor
- 38, 39: Seitenkanäle
- 42: Resonator
- 44: Sensor zur Bodenuntersuchung
- 46: Temperaturmesseinrichtung
- 48: Wanddickenmesseinrichtung
- 49: Bodenöffnung
- 52: Bildaufnahmeeinrichtung
- 54: Magnetron
- 56: Leitungseinrichtung
- 70: Sensoreinrichtung
- 74, 74a: Regulierkörper
- 76: Antriebseinrichtungen für Regulierkörper
- 82: Zirkulator
- 83: Einkoppeleinrichtung
- 84: Pyrometer
- 88: Wasserlast
- L: Längsrichtung
- X: Drehachse
- Y: Richtung

## Patentansprüche

1. Vorrichtung (1) zum Umformen von Kunststoffvorformlingen (10) zu Zwischenbehältnissen , mit einer Transporteinrichtung (2), welche die Kunststoffvorformlinge (10) transportiert, mit einer Holzeinrichtung (4), welche Bereiche der Kunststoffvorformlinge (10) erwärmt und mit einer mechanisch auf die Kunststoffvorformlinge einwirkenden Streckeinrichtung (6), welche die Kunststoffvorformlinge (10) entlang deren Längsrichtung (L) dehnt,
wobei die Heizeinrichtung (4) und die Streckeinrichtung (6) derart angeordnet sind, dass ein Erwärmen der Kunststoffvorformlinge (10) vor und nach dem Dehnen der Kunststoffvorformlinge (10) ermöglicht ist,
**dadurch gekennzeichnet, dass**
zumindest die Heizeinrichtung (4) derart gestaltet ist, dass vor dem Dehnen zumindest teilweise andere Bereiche des Kunststoffvorformlings (10) erwärmt werden als nach dem Dehnen oder dass sich die auf bestimmte Bereiche des Kunststoffvorformlings (10) aufgebrachte Heizleistungen vor und nach dem Dehnvorgang unterscheiden.

2. Vorrichtung (1) nach Anspruch 1,
**dadurch gekennzeichnet, dass**
die Heizeinrichtung (4) eine Mikrowellenheizeinrichtung (4) ist.

3. Vorrichtung (1) nach wenigstens einem der vorangegangenen Ansprüche,
**dadurch gekennzeichnet, dass**
die Heizeinrichtung (4) derart beschaffen ist, dass sie nur vorgegebene Teilbereiche des Kunststoffvorformlings (10) erwärmt und insbesondere derart, dass ein Bodenbereich und/oder ein Gewindebereich des Kunststoffvorformlings (10) nicht erwärmt werden.

4. Vorrichtung (1) nach wenigstens einem der vorangegangenen Ansprüche,
**dadurch gekennzeichnet, dass**
die Vorrichtung eine Vielzahl von Aufnahmeelementen zur Aufnahme der Kunststoffvorformlinge (10) aufweist, wobei die Kunststoffvorformlinge (10) innerhalb dieser Aufnahmeelemente erwärmbar sind.

5. Vorrichtung (1) nach wenigstens einem der vorangegangenen Ansprüche,
**dadurch gekennzeichnet, dass**
die Transporteinrichtung einer drehbaren Träger zum Transportieren der Kunststoffvorformlinge (10) aufweist

6. Vorrichtung (1) nach wenigstens einem der vorangegangenen Ansprüche,
**dadurch gekennzeichnet, dass**
die Vorrichtung (1) eine Blaseinrichtung (12) aufweist, um die Kunststoffvorformlinge (10) mit einem bevorzugt gasförmigen Medium zu beaufschlagen.

7. Vorrichtung (1) nach wenigstens einem der vorangegangenen Ansprüche,
**dadurch gekennzeichnet, dass**
die Vorrichtung (1) eine Wanddickenmesseinrichtung (48) zum Bestimmen einer Wandungsdicke der Kunststoffvorformlinge (10) aufweist.

8. Vorrichtung (1) nach wenigstens einem der vorangegangenen Ansprüche,
**dadurch gekennzeichnet, dass**
die Vorrichtung (1) eine Steuerungseinrichtung (20) zum Steuern des Umformungsvorgangs aufweist.

9. Vorrichtung (1) nach wenigstens einem der vorangegangenen Ansprüche,
**dadurch gekennzeichnet, dass**
die Streckeinrichtung (6) eine Reckstange (22) aufweist, welche in den Kunststoffvorformling (10) einführbar ist.

10. Vorrichtung (1) nach Anspruch 7,
**dadurch gekennzeichnet, dass**
die Reckstange aus einem Kunststoff gefertigt ist.

11. Vorrichtung (1) nach wenigstens einem der vorangegangenen Ansprüche,
**dadurch gekennzeichnet, dass**
die Vorrichtung (1) eine Dreheinrichtung aufweist, welche die Kunststoffvorformlinge (10) um deren Längsachse dreht.

12. Verfahren zum Umformen von Kunststoffvorformlinge (10) zu Zwischenbehältnissen, wobei Kunststoffvorformlinge transportiert werden, mittels einer Heizeinrichtung (4) erwärmt werden und mittels einer Streckeinrichtung (6) in ihrer Längsrichtung (L) gedehnt werden, wobei die Streckeinrichtung (6) mechanisch auf die Kunststoffvorformlinge (10) zu deren Dehnung einwirkt,
wobei ein Erwärmen der Kunststoffvorformlinge (10) vor und nach dem Dehnen der Kunststoffvorformlinge (10) durchgeführt wird,
**dadurch gekennzeichnet, dass**
die Heizeinrichtung (4) vor dem Dehnen zumindest teilweise andere Bereiche des Kunststoffvorformlings (10) erwärmt als nach dem Dehnen oder dass die Heizleistungen vor und nach dem Dehnvorgang auf bestimmte Bereiche des Kunststoffvorformlings (10) unterschiedlich aufgebrachten werden.

13. Verfahren nach Anspruch 12,
**dadurch gekennzeichnet, dass**
die Kunststoffvorformlinge (10) um ihre Längsachse (L) oder eine zu dieser Längsachse parallele Achse gedreht werden.

14. Verfahren nach einem der Ansprüche 12 oder 13,
**dadurch gekennzeichnet, dass**
eine Steuerungseinrichtung (20) den Umformungsvorgang zumindest vor der endgültigen Ausformung der Kunststoffvorformlinge (10) in Abhängigkeit von einer Wandungsdicke der Kunststoffvorformlinge (10) steuert.

## Claims

1. An apparatus (1) for moulding plastic containers (10) into intermediate containers, including a transport device (2) which transports the plastic preforms, including a heating device (4) for heating areas of the plastic preforms (10) and including a stretching device (6) mechanically acting upon the plastic preforms, which stretching device stretches the plastic preforms (10) along the longitudinal direction (L) thereof, wherein the heating device (4) and the stretching device (6) are arranged in such a way that the plastic preforms may be heated before and after the stretching of the plastic preforms (10), **characterized in that** at least the heating device (4) is designed in such a way that prior to the stretching at least partially other regions of the plastic preform (10) are heated than after the stretching or that heating outputs acting upon defined regions of the preforms (10) before and after the stretching process differ from each other.

2. The apparatus (1) as claimed in Claim 1, wherein the heating device (4) is a microwave heating device (4).

3. The apparatus (1) as claimed in at least one of the preceding claims, wherein the heating device (4) is designed in such a way that it heats only predetermined partial areas of the plastic preform (10) and in particular in such a way that a bottom area and/or a screw thread area of the plastic preform is/are not heated.

4. The apparatus (1) as claimed in at least one of the preceding claims, wherein the apparatus includes a plurality of reception elements for receiving the plastic preforms (10), wherein the plastic preforms (10) may be heated within these reception elements.

5. The apparatus (1) as claimed in at least one of the preceding claims, wherein the transport device includes a rotatable carrier for transporting the plastic preforms.

6. The apparatus (1) as claimed in at least one of the preceding claims, wherein the apparatus (1) includes a blow device (12) in order to apply a preferably gaseous medium onto the plastic preforms.

7. The apparatus (1) as claimed in at least one of the preceding claims, wherein the apparatus (1) includes a wall thickness measuring device (48) for determining a wall thickness of the plastic preforms (10).

8. The apparatus (1) as claimed in at least one of the preceding claims, wherein the apparatus (1) includes a control device (20) for controlling the moulding process.

9. The apparatus (1) as claimed in at least one of the preceding claims, wherein the stretching device (6) includes a stretching rod (22) which may be inserted into the plastic preform (10).

10. The apparatus (1) as claimed in Claim 7, wherein the stretching rod is made from a plastic material.

11. The apparatus (1) as claimed in at least one of the preceding claims, wherein the apparatus (1) includes a rotating device which rotates the plastic preforms about the longitudinal axis thereof.

12. A method for moulding plastic containers (10) into intermediate containers, wherein plastic preforms are transported, are heated by means of a heating device (4) and are stretched by means of a stretching device (6) in the longitudinal direction (L) thereof, wherein the stretching device (6) acts mechanically upon the plastic preforms (10) for the purpose of stretching the same, wherein heating of the plastic preforms is carried out before and after the stretching of the plastic preforms (10), **characterized in that** the heating device (4) prior to the stretching partially heats other regions of the plastic preform than after the stretching or that the heating outputs act upon defined regions of the plastic preform (10) in a different manner prior to and after the stretching process.

13. The method as claimed in Claim 12, **characterized in that** the plastic preforms are rotated about the longitudinal axis (L) thereof or about an axis parallel to this longitudinal axis.

14. The method as claimed in Claims 12 or 13, **characterized in that** a control device (20) controls the moulding process at least before the final shaping of the plastic preforms (10) as a function of a wall thickness of the plastic preforms (10).

## Revendications

1. Installation (1) pour le formage de préformes en matière plastique (10) pour obtenir des récipients intermédiaires, avec un dispositif de transport (2) convoyant les préformes en matière plastique (10), avec un dispositif de chauffage (4) chauffant des zones des préformes en matière plastique (10), et avec un dispositif d'étirage (6) agissant mécaniquement sur les préformes en matière plastique et étirant les préformes en matière plastique (10) dans leur direction longitudinale (L),
le dispositif de chauffage (4) et le dispositif d'étirage (6) étant disposés de manière à permettre un chauffage des préformes en matière plastique (10) avant et après l'étirage des préformes en matière plastique (10), **caractérisée en ce qu'**
au moins le dispositif de chauffage (4) est prévu pour qu'avant étirage, d'autres zones au moins de la préforme en matière plastique (10) soient au moins partiellement chauffées, qu'après étirage, ou **en ce que** les puissances de chauffage appliquées sur des zones définies de la préforme en matière plastique (10) soient différentes avant et après le processus d'étirage.

2. Installation (1) selon la revendication 1, **caractérisée en ce que**
le dispositif de chauffage (4) est un dispositif de chauffage par micro-ondes (4).

3. Installation (1) selon au moins une des revendications précédentes, **caractérisée en ce que**
le dispositif de chauffage (4) est réalisé de manière à ne chauffer que des zones partielles définies de la préforme en matière plastique (10), et en particulier de manière qu'une zone de fond et/ou une zone de filetage de la préforme en matière plastique ne soient pas chauffées.

4. Installation (1) selon au moins une des revendications précédentes, **caractérisée en ce que**
ladite installation comporte une pluralité d'éléments de réception pour recevoir les préformes en matière plastique (10), lesdites préformes en matière plastique (10) pouvant être chauffées à l'intérieur desdits éléments de réception.

5. Installation (1) selon au moins une des revendications précédentes, **caractérisée en ce que**
le dispositif de transport comporte un support rotatif pour le convoyage des préformes en matière plastique (10).

6. Installation (1) selon au moins une des revendications précédentes, **caractérisée en ce que**
ladite installation (1) comporte un dispositif de soufflage (12) pour exposer les préformes en matière plastique (10) à un fluide préférentiellement gazeux.

7. Installation (1) selon au moins une des revendications précédentes, **caractérisée en ce que**
ladite installation (1) comporte un dispositif de mesure d'épaisseur de paroi (48) pour déterminer une épaisseur de paroi des préformes en matière plastique (10).

8. Installation (1) selon au moins une des revendications précédentes, **caractérisée en ce que**
ladite installation (1) comporte un dispositif de commande (20) pour commander le processus de formage.

9. Installation (1) selon au moins une des revendications précédentes, **caractérisée en ce que**
le dispositif d'étirage (6) comporte une barre d'étirage (22) pouvant être introduite dans la préforme en matière plastique (10).

10. Installation (1) selon la revendication 7, **caractérisée en ce que** la barre d'étirage est en matière plastique.

11. Installation (1) selon au moins une des revendications précédentes, **caractérisée en ce que**
ladite installation (1) comporte un dispositif de rotation faisant tourner les préformes en matière plastique (10) autour de leur axe longitudinal.

12. Procédé de formage de préformes en matière plastique (10) de manière à obtenir des récipients intermédiaires, des préformes en matière plastique étant convoyées, chauffées au moyen d'un dispositif de chauffage (4), et étirées dans leur direction longitudinale (L) au moyen d'un dispositif d'étirage (6), ledit dispositif d'étirage (6) agissant mécaniquement sur les préformes en matière plastique (10) pour étirer celles-ci,
un chauffage des préformes en matière plastique (10) étant effectué avant et après l'étirage des préformes en matière plastique (10),
**caractérisé en ce qu'**
avant l'étirage, le dispositif de chauffage (4) chauffe au moins partiellement d'autres zones de la préforme en matière plastique (10) qu'après étirage, ou **en ce que** les puissances de chauffage sont appliquées de manière différenciée sur des zones définies de la préforme en matière plastique (10) avant et après le processus d'étirage.

13. Procédé selon la revendication 12, **caractérisé en ce que**
les préformes en matière plastique (10) sont tournées autour de leur axe longitudinal (L) ou d'un axe parallèle audit axe longitudinal.

14. Procédé selon la revendication 12 ou 13, **caractérisé en ce que**
un dispositif de commande (20) commande le processus de formage en fonction d'une épaisseur de paroi des préformes en matière plastique (10), au moins avant le formage définitif des préformes en matière plastique (10).
